# FASCICULE DE BREVET EUROPEEN

(11) **EP 3 011 371 B1**
(45) Date de publication et mention de la délivrance du brevet: **07.03.2018**
(21) Numéro de dépôt: 14731258.1
(22) Date de dépôt: 17.06.2014
(51) Int. Cl.: G02B 5/00, G02B 5/18, G02B 5/20

(54) **ELÉMENT DE FILTRAGE OPTIQUE ANGULAIRE POUR LE FILTRAGE ANGULAIRE À SÉLECTIVITÉ ANGULAIRE CONTRÔLÉE**
GEWINKELTES OPTISCHES FILTERELEMENT FÜR WINKELFÖRMIGE FILTERUNG MIT GESTEUERTER WINKELFÖRMIGER SELEKTIVITÄT
OPTICAL ANGULAR FILTERING ELEMENTS FOR FILTERING WITH CONTROLLED ANGULAR SELECTIVITY

(30) Priorité: 17.06.2013 FR 1355653
(43) Date de publication de la demande: 27.04.2016
(73) Titulaire: Centre National de la Recherche Scientifique (C.N.R.S.), 75794 Paris Cedex 16 (FR); Office National d'Etudes et de Recherches Aérospatiales, 91120 Palaiseau (FR)
(72) Inventeur: SAKAT, Emilie, F-91400 Gometz-la-Ville (FR); HAÏDAR, Riad, F-75012 Paris (FR); PELOUARD, Jean-Luc, F-75020 Paris (FR); BOUCHON, Patrick, F-91370 Verrières-le-Buisson (FR); VINCENT, Grégory, F-91300 Massy (FR)
(74) Mandataire: Osha Liang
(86) Numéro de dépôt international: PCT/EP2014/062766
(87) Numéro de publication internationale: WO 2014/202636

(56) Documents cités:
- US-A1- 2010 328 587
- US-A1- 2013 120 843
- EMILIE SAKAT ET AL: "Metal-dielectric bi-atomic structure for angular-tolerant spectral filtering", OPTICS LETTERS, THE OPTICAL SOCIETY, vol. 38, no. 4, 15 février 2013 (2013-02-15), pages 425-427, XP001580490, ISSN: 0146-9592, DOI: HTTP://DX.DOI.ORG/10.1364/OL.38.000425 cité dans la demande
- Samuel T Thurman ET AL: "Controlling the spectral response in guided-mode resonance filter design", Applied optics, 1 juin 2003 (2003-06-01), pages 3225-310, XP055102895, United States DOI: 10.1364/AO.42.003225 Extrait de l'Internet: URL:http://www.ncbi.nlm.nih.gov/pubmed/127 90473
- SASAKI H ET AL: "CWDM multi/demultiplexer consisting of stacked dielectric interference filters and off-axis diffractive lenses", IEEE PHOTONICS TECHNOLOGY LETTERS, IEEE SERVICE CENTER, PISCATAWAY, NJ, US, vol. 15, no. 4, 1 April 2003 (2003-04-01), pages 551-553, XP011427039, ISSN: 1041-1135, DOI: 10.1109/LPT.2003.809296

## Description

### Domaine technique de l'invention

La présente invention concerne un élément de filtrage optique angulaire pour le filtrage angulaire à sélectivité angulaire contrôlée, et un dispositif pour le filtrage angulaire sélectif à plusieurs angles d'incidence. Elle s'applique notamment à la détection optique multidirectionnelle, plus particulièrement à la détection optique multidirectionnelle dans l'infrarouge.

### Etat de l'art

La surveillance de sites très variés tels que l'intérieur des bâtiments pour y adapter l'éclairage, le chauffage et/ou la climatisation en fonction de la présence humaine détectée, les voies d'accès pour la surveillance, les sites industriels à risques divers (par exemple la détection de fuites toxiques), ou les lieux de grandes manifestations publiques pour en assurer la sécurité, nécessite des systèmes de télédétection adaptés. Notamment, la détection optique dans l'infrarouge permet de détecter la présence humaine et permet aussi la détection de gaz présentant une signature spectrale dans l'infrarouge (comme par exemple le méthane, le dioxyde de carbone, l'ammoniac, le protoxyde d'azote, etc.). Actuellement ce type de télédétection se fait à l'aide de caméras infrarouges équipées d'objectifs « grand angle », tels que par exemple la caméra SecondSight® de la société Bertin Technologies pour la détection de gaz. Cependant, le coût élevé de ces optiques et celui généré par la complexité des images à traiter rend ces caméras particulièrement chères. Des publications récentes ont étudié la possibilité de réalisation d'imageurs infrarouges très grand angle utilisant un sténopé et un détecteur infrarouge, pour des applications de surveillance notamment (voir par exemple G. Druart et al. « Compact infrared pinhole fisheye for wide field applications", Appl. Opt., 48(6) 1104-1113 (2009)). Ces imageurs, comparés aux optiques traditionnelles, permettent de gagner en coût et en encombrement. Cependant, des lentilles optiques adaptées aux longueurs d'onde recherchées pour la détection restent nécessaires ce qui implique un coût élevé du système.

Parallèlement au développement des systèmes d'imagerie infrarouge grand angle pour les applications de télésurveillance, on observe depuis plusieurs années le développement croissant des filtres optiques nanostructurés (ou plus précisément sub longueurs d'onde), notamment pour des applications d'imagerie multi spectrale dans l'infrarouge. Ces filtres passe bande peuvent fonctionner en transmission, en réflexion ou en absorption. Différentes technologies basées sur la technologie de la micro-électronique et qui permettent toutes des fabrications massivement parallèles sont connues.

On connait par exemple comme filtres optiques nanostructurés, des filtres interférentiels (voir par exemple A. Piegari, et al., « Variable narrowband transmission filters with a wide rejection band for spectrometry », Appl. Opt. 45.16, p. 3768-3773 (2006)). Les filtres interférentiels sont formés d'ensembles multicouches, la nano structuration étant réalisée dans une direction normale à la surface des couches.

On connait également des filtres optiques nanostructurés présentant une nano structuration réalisée dans le plan du composant. On connait ainsi par exemple des filtres en transmission à base de réseaux métalliques suspendus épais (i.e. dont l'épaisseur du réseau est grande devant la largeur des fentes du réseau) pour des applications d'imagerie multispectrale (voir par exemple R. Haïdar et al., « Free-standing subwavelength metallic gratings for snapshot multipspectral imaging », Appl. Phys. Lett., 96, 221104 (2010)). Dans l'article de P. Ghenuche et al. (« Optical extinction in a single layer of nanorods », Phys. Rev. Lett., 109, 143903 (2012)), il est décrit des filtres en réflexion, formés à partir d'une grille diélectrique. On connait également des filtres à base de résonance de mode guidé (ou GMR selon l'abréviation de l'expression anglo-saxonne « Guided Mode Resonance »). Ces filtres peuvent être tout diélectrique, en réflexion ou en transmission (voir par exemple Y. Ding et al., "Doubly resonant single-layer bandpass optical filters", Opt. Lett., 29, 10 (2004) et A.-L. Fehrembach et al. "Experimental démonstration of a narrowband, angular tolérant, polarization independent, doubly periodic resonant grating filter", Opt. Lett., 32, 15 (2007)) ou métal-diélectrique (voir par exemple E. Sakat et al., « Metal-dielectric bi-atomic structure for angular-tolerant spectral filtering », Opt. Lett., 38(4), 425 (2013)). Enfin des filtres passe bande en absorption ont été montrés pour des applications de détection sélective en longueur d'onde (voir par exemple P. Bouchon et al., « Wideband omnidirectional infrared absorber with a patchwork ofplasmonic nanoantennas », Opt. Lett., 37(6), 1038 (2012)). Ces filtres en absorption utilisent des structures de type MIM (selon l'abréviation de Métal, Isolant, Métal). Dans ces publications, un objectif recherché est en général de pouvoir définir la réponse spectrale d'un filtre passe-bande en fonction d'un cahier des charges donné, et de réaliser par des techniques de lithographie des mosaïques de filtres passe-bandes sur substrat unique pour la réalisation d'imageurs multispectraux ou large bande, compacts.

La présente invention propose d'utiliser la technologie des filtres optiques nanostructurés pour concevoir un élément de filtrage optique à sélectivité angulaire contrôlée qui pourra être mis en oeuvre dans un système de détection multidirectionnelle, notamment pour des applications de télésurveillance dans l'infrarouge bas coût.

### RESUME DE L'INVENTION

Selon un premier aspect, l'invention concerne un élément de filtrage optique optimisé pour le filtrage angulaire autour d'un angle d'incidence de fonctionnement donné, dans une bande spectrale donnée, comprenant :
- un premier filtre spectral nanostructuré, passe-bande, comprenant, dans ladite bande spectrale, une première longueur d'onde centrale de filtrage qui présente une première courbe de dispersion angulaire, la courbe de dispersion angulaire représentant la variation de la première longueur d'onde centrale de filtrage déterminée en fonction de l'angle d'incidence sur l'élément de filtrage optique;
- un deuxième filtre spectral nanostructuré, passe-bande, comprenant, dans ladite bande spectrale, une deuxième longueur d'onde centrale de filtrage qui présente une deuxième courbe de dispersion angulaire représentant la variation de la deuxième longueur d'onde centrale de filtrage déterminée en fonction de l'angle d'incidence sur l'élément de filtrage optique, la deuxième courbe de dispersion angulaire étant sécante avec la première courbe de dispersion angulaire autour de l'angle d'incidence de fonctionnement.

Chacun des premier et deuxième filtres spectraux peut être par exemple un filtre fonctionnant en transmission ou en réflexion. Dans certains cas particuliers, un des filtres spectraux peut également être un filtre en absorption.

Ainsi sont agencés ensemble au moins un premier filtre spectral et un deuxième filtre spectral qui ont des courbes de dispersion angulaire sécantes (non confondues), un filtre spectral, dit filtre spectral d'entrée étant destiné à recevoir le flux lumineux incident sur l'élément de filtrage et chaque filtre subséquent étant destiné à recevoir le flux transmis ou réfléchi par le filtre spectral précédent. On obtient de cette manière un élément de filtrage optique angulaire dont la bande passante est centrée sur l'angle pour lequel les courbes de dispersion se coupent. On peut donc contrôler l'angle de fonctionnement de l'élément de filtrage angulaire par le choix des filtres spectraux nanostructurés. Par ailleurs, en contrôlant les pentes locales des courbes de dispersion au voisinage de l'angle de fonctionnement ainsi que les bandes passantes spectrales des filtres, on contrôle également la sélectivité angulaire de l'élément de filtrage, permettant ainsi de réaliser un élément de filtrage optique à angle d'incidence de fonctionnement et sélectivité angulaire contrôlés.

Selon une variante, les premier et deuxième filtres spectraux sont agencés dans des plans parallèles. Alternativement, le deuxième filtre spectral peut présenter un angle donné avec le premier filtre spectral.

Selon une variante, l'un au moins des premier et deuxième filtres spectraux nanostructurés est un filtre interférentiel, un filtre à résonance de mode guidé, un filtre à réseaux métalliques ou diélectrique suspendus, ou encore un filtre comprenant une résonance de type MIM (métal, isolant, métal).

Selon un deuxième aspect, l'invention concerne un dispositif pour le filtrage angulaire sélectif à plusieurs angles d'incidence donnés, comprenant un ensemble d'éléments de filtrage optiques selon le premier aspect, optimisés chacun pour le filtrage angulaire autour d'un angle d'incidence de fonctionnement donné.

Grâce à cette combinaison d'éléments de filtrage, il est possible de réaliser une « mosaïque » de filtres pour le filtrage à différents angles d'incidence. Par ailleurs, les premier et deuxième filtres étant des filtres optiques nanostructurés, des technologies de fabrication massivement parallèles issues des techniques de la micro-électroniques pourront être mises en oeuvre pour réaliser une ou plusieurs matrices de premiers filtres optiques d'une part, une ou plusieurs matrices de deuxièmes filtres d'autre part, permettant ainsi la réalisation d'un dispositif pour le filtrage angulaire multidirectionnel bas coût et de faible encombrement.

Les matrices de filtres spectraux peuvent être des matrices à une ou deux dimensions, l'arrangement des filtres spectraux sur chaque matrice pouvant être régulier ou non.

Selon un troisième aspect, l'invention concerne un système de détection optique multidirectionnelle comprenant un dispositif pour le filtrage angulaire sélectif selon le deuxième aspect et un ensemble d'éléments de détection optique, chaque élément de détection optique étant associé à un élément de filtrage optique pour recevoir le flux lumineux transmis par ledit élément de filtrage à l'angle d'incidence de fonctionnement dudit élément de filtrage.

Un dispositif pour le filtrage angulaire multidirectionnel selon le second aspect de la présente description permet de remplacer avantageusement pour la détection de présence par exemple, une optique « grand angle » omnidirectionnelle de l'art antérieur. La réduction du coût de cet objectif est accompagnée d'une simplification des signaux générés permettant une généralisation de son usage. Par exemple, une présence (humaine, gaz) est détectée dans une zone de l'espace lorsqu'il y a détection d'un signal dans l'élément de détection optique correspondant à l'élément de filtrage optique.

Selon une variante, un ensemble d'éléments de détection optique, ou « pixels », sont associés à un élément de filtrage optique pour recevoir le flux lumineux à l'angle d'incidence de fonctionnement de l'élément de filtrage et cumuler ainsi les signaux reçus pas l'ensemble de ces éléments de détection. Alternativement, il ne peut y avoir qu'un seul élément de détection optique associé à un élément de filtrage optique.

Selon une variante, les éléments de détection optique sont agencés selon une matrice à une ou deux dimensions, comprenant un support plan.

Selon une variante, les éléments de détection optique présentent une fonction de filtrage spectral passe-bande en absorption, et forment l'un des premier ou deuxième filtres spectraux des éléments de filtrage angulaires du système de détection multidirectionnelle.

Selon une variante, le système de détection optique multidirectionnelle comprend en outre un boitier dans lequel sont agencés le dispositif pour le filtrage angulaire sélectif et l'ensemble des éléments de détection optique.

Selon un quatrième aspect, l'invention concerne une méthode de fabrication d'un système de détection optique multidirectionnelle selon le troisième aspect comprenant :
- la fabrication d'une première matrice de premiers éléments spectraux sur un premier support plan ;
- la fabrication d'une deuxième matrice de deuxièmes éléments spectraux sur un deuxième support plan ;
- la fabrication d'une troisième matrice d'éléments de détection optique sur un troisième support plan ;
- l'arrangement desdites matrices dans un boitier.

La fabrication de chacune des matrices peut être faite par des technologies connues de lithographie, par exemple des technologies de nano-impression pour réduire les coûts de fabrication.

### BREVE DESCRIPTION DES DESSINS

D'autres avantages et caractéristiques de l'invention apparaîtront à la lecture de la description, illustrée par les figures suivantes :
- Figure 1, le schéma d'un exemple de système optique de détection multidirectionnelle selon la présente description ;
- Figures 2A et 2B, deux exemples de courbes de dispersion angulaire croisées d'un premier filtre spectral et d'un deuxième filtre spectral, pour la réalisation d'un élément de filtrage optique angulaire selon la présente description ;
- Figure 3, un tableau représentant différents agencements possibles pour un système optique de détection multidirectionnelle selon la présente description ;
- Figure 4, un exemple de filtre spectral de type à résonance de mode guidé pour la réalisation d'un filtre spectral d'un élément de filtrage optique angulaire selon la présente description ;
- Figures 5A et 5B, des exemples respectivement d'un premier filtre spectral et d'un deuxième filtre spectral pour la réalisation d'un élément de filtrage optique angulaire selon la présente description ;
- Figures 6A et 6B, les courbes montrant les spectres de transmission respectivement pour les premier et deuxième filtres spectraux représentés sur les figures 5A et 5B pour différents angles d'incidence;
- Figure 7, une courbe montrant la transmission d'un élément de filtrage optique angulaire obtenu par association des premier et deuxième filtres représentés sur les figures 5A et 5B;
- Figure 8, un diagramme représentant la transmission TM en sortie d'un élément de filtrage optique angulaire obtenu par association des premier et deuxième filtres spectraux représentés sur les figures 5A et 5B, en fonction de l'angle d'incidence et de l'angle azimutal ;
- Figures 9A et 9B, des exemples de mise en oeuvre de systèmes de détection optique multidirectionnelle selon la présente description ;
- Figure 10, un exemple de dispositif de filtrage sélectif à plusieurs angles d'incidence, adapté à une mise en oeuvre d'un système de détection tel que représenté sur la figure 9A ;
- Figure 11, un autre exemple de système de détection optique multidirectionnelle selon la présente description ;
- Figures 12A à 12I les étapes de réalisation d'une matrice de filtres spectraux, selon un mode de réalisation de la présente description ;
- Figure 13, un exemple de réalisation d'un système de détection optique multidirectionnelle selon la présente description.

### DESCRIPTION DETAILLEE

Sur les figures, les éléments sont représentés à des fins d'illustration et les échelles ne sont pas respectées. Par ailleurs, les éléments identiques sont repérés par les mêmes références.

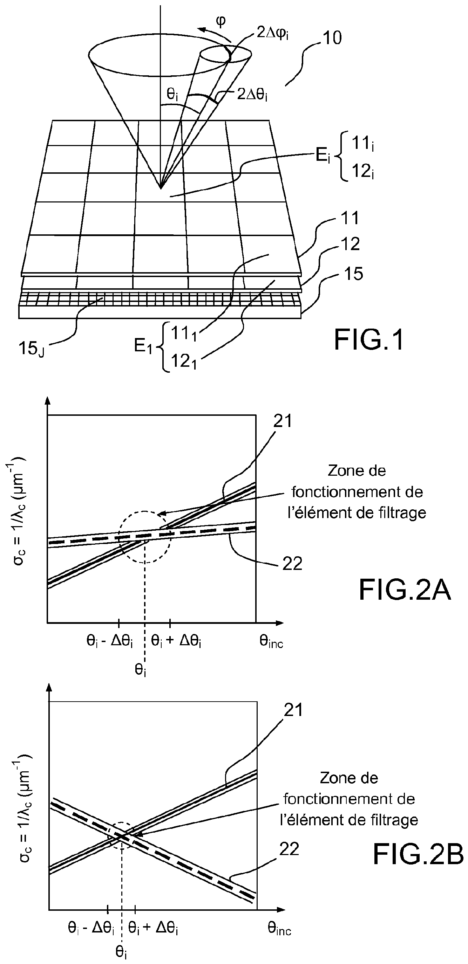

La figure 1 représente de façon schématique un exemple de système de détection optique multidirectionnelle 10 selon la présente description. Le système de détection 10 est prévu pour fonctionner dans une bande spectrale donnée en fonction de l'application, par exemple dans l'infrarouge pour la détection de la présence humaine ou la détection de gaz. Plus précisément, le système de détection peut être prévu pour fonctionner par exemple dans les bandes II (3-5 µm) ou III (8-12 µm) de la transmission atmosphérique.

Le système de détection multidirectionnelle 10 comprend un ensemble d'éléments de détection 15ⱼ, adaptés pour la détection dans la bande spectrale recherchée du système de détection 10, et organisés dans cet exemple sous forme d'une matrice 15 à deux dimensions. Dans le cas d'un fonctionnement dans l'infrarouge, les éléments de détection sont par exemple des microbolomètres, permettant la réalisation d'un système de détection bas coût. Alternativement, les éléments de détection peuvent être des détecteurs quantiques refroidis mettant en oeuvre une jonction PN ou PIN à base de semiconducteurs comme HgCdTe (tellure de mercure et cadmium), ou un super réseau InAs/GaSb (arséniure d'indium / antimoniure de gallium), ou des puits quantiques du type de ceux utilisés dans les détecteurs à puits quantiques ou QWIP (selon l'abréviation de « Quantum Well Infrared Detectors ») ou dans les détecteurs à cascade quantique ou QCD (selon l'abréviation de « Quantum Cascade Detectors ») dans les filière GaAs (arséniure de gallium) et InP (phosphure d'indium), ou des détecteurs photo-résistifs ou bien photo-capacitifs, ou bien, comme cela sera décrit plus en détails par la suite, des éléments de détection nanostructurés intégrant une fonction de filtrage spectral passe bande en absorption.

Le système de détection multidirectionnelle 10 comprend également un ensemble d'éléments de filtrage optique Eᵢ, chaque élément de filtrage optique Eᵢ étant optimisé pour le filtrage angulaire autour d'un angle d'incidence de fonctionnement donné, dans la bande spectrale recherchée. Dans l'exemple de la figure 1, le flux lumineux transmis par chaque élément de filtrage angulaire Eᵢ à l'angle d'incidence de fonctionnement est reçu par plusieurs éléments de détection, le signal de détection pouvant alors être sommé au niveau de chaque élément de filtrage angulaire. Alternativement, il est possible de ne prévoir qu'un élément de détection par élément de filtrage angulaire Eᵢ.

Selon la présente description, chaque élément de filtrage angulaire Eᵢ comprend au moins un premier filtre spectral 11ᵢ nanostructuré, passe-bande, et un deuxième filtre spectral 12ᵢ nanostructuré, passe-bande. Ainsi, dans l'exemple de la figure 1, l'élément de filtrage angulaire E₁ comprend un filtre spectral d'entrée 11₁ destiné à recevoir le flux incident sur l'élément de filtrage angulaire E₁ et un filtre spectral de sortie 12₁ destiné à recevoir le flux lumineux transmis par le premier filtre spectral 11₁. Dans cet exemple, les premier et deuxième filtres spectraux fonctionnent en transmission. Dans l'exemple de la figure 1, les premiers filtres spectraux 11ᵢ sont organisés sous forme d'une première matrice 11 à deux dimensions, sensiblement plane, et les deuxièmes filtres spectraux 12ᵢ sont organisés sous forme d'une deuxième matrice 12 à deux dimensions, sensiblement plane et parallèle à la première matrice. Dans l'exemple de la figure 1, la mosaïque réalisée par un pavage rectangulaire n'est qu'un exemple. La disposition des filtres spectraux dans ce plan peut être quelconque.

Selon la présente description, chacun des premier et deuxième filtres spectraux 11ᵢ, 12ᵢ composant l'élément de filtrage angulaire Eᵢ, comprend, dans la bande spectrale de fonctionnement du système de détection multidirectionnelle, respectivement une première longueur d'onde centrale de filtrage et une deuxième longueur d'onde centrale de filtrage, les première et deuxième longueurs d'onde centrale de filtrage présentant des courbes de dispersion angulaire sécantes autour de l'angle de fonctionnement recherché pour l'élément de filtrage angulaire Eᵢ.

Dans la présente description, on appelle courbe de dispersion angulaire d'un filtre spectral 11ᵢ, 12ᵢ, la courbe représentant la variation de la longueur d'onde centrale de filtrage (ou du nombre d'onde, inverse de la longueur d'onde) du filtre spectral, en fonction de l'angle d'incidence sur l'élément de filtrage angulaire dont le filtre spectral fait partie. Dans le cas de deux filtres spectraux 11ᵢ, 12ᵢ, fonctionnant en transmission et agencés de façon sensiblement parallèle, comme dans l'exemple de la figure 1, on comprendra que l'angle d'incidence sur l'élément de filtrage angulaire est aussi l'angle d'incidence sur chacun des filtres spectraux 11ᵢ, 12ᵢ. Dans le cas de filtres spectraux fonctionnant en réflexion, ou agencés de façon non parallèle, l'angle d'incidence sur l'élément de filtrage angulaire pourra différer de l'angle d'incidence sur le deuxième filtre spectral, comme cela sera expliqué plus en détails par la suite.

D'une manière générale, un filtre spectral nanostructuré, passe-bande, présente à angle azimutal *ϕᵢ* donné, une fonction de filtrage (en transmission, en réflexion, ou en absorption) *Fᵢ*(*λ*, *θ_{inc}*) dépendant à la fois de l'angle d'incidence θ_{inc} et de la longueur d'onde *λ*. Ainsi, en combinant deux filtres spectraux ayant des dispersions angulaires différentes, la fonction de filtrage F de l'ensemble, égale au produit des fonctions de filtrage des deux filtres (*F*=*F*₁*xF*₂), ne sera significative que dans un cône dans lequel la fonction de filtrage à travers les deux filtres est significative. L'axe de ce cône est donné par l'angle (*θᵢ*, *ϕᵢ*) pour lequel les courbes de dispersion des deux filtres spectraux se croisent, appelé dans la présente description angle de fonctionnement de l'élément de filtrage angulaire. Les angles au sommet (2Δθᵢ, 2Δϕᵢ) de ce cône, caractérisé par les intervalles [*θᵢ*-*Δθᵢ*, *θᵢ*+*Δθᵢ*] et [*ϕᵢ*-*Δϕᵢ*, *ϕᵢ*+*Δϕᵢ*], définissent le cône dans lequel la fonction de filtrage est significative, c'est-à-dire supérieure à un pourcentage donné de la valeur maximale *Fₘₐₓ* de la fonction de filtrage. Les intervalles angulaires [*θᵢ*-*Δθᵢ*], *θᵢ*+*Δθᵢ*] et [*ϕᵢ-Δϕᵢ*, *ϕᵢ*+*Δϕᵢ*] sont nommés respectivement largeur de bande angulaire zénithale (2*Δθᵢ)* et largeur de bande angulaire azimutale (2*Δϕᵢ)*. Par exemple, on pourra définir le cône de fonctionnement de l'élément de filtrage angulaire par le cône dans lequel la fonction de filtrage est supérieure à *Fₘₐₓ*/*5.*

Les figures 2A et 2B illustrent des courbes de dispersion 21, 22 de deux filtres spectraux, selon deux exemples. Ici, les courbes de dispersion représentent le nombre d'onde σ_{c}, inverse de la longueur d'onde de centrage λ_{c} de chaque filtre spectral passe-bande, en fonction de l'angle d'incidence θ_{inc} sur l'élément de filtrage angulaire, pour un angle azimutal donné. Sur ces figures sont représentés l'angle d'incidence θᵢ pour lequel les deux courbes de dispersion angulaire sont sécantes et la largeur de bande angulaire 2Δθᵢ. On observe à partir de ces figures que la sélectivité angulaire de l'élément de filtrage angulaire Eᵢ selon la présente description dépend des différences entre les dispersions angulaires des premier et deuxième filtres spectraux qui le composent, et plus précisément de la différence de pente au voisinage de l'angle de fonctionnement. Ainsi, pour obtenir une sélectivité angulaire faible (Δθᵢ grand), on pourra choisir des filtres présentant des relations de dispersion proches l'une de l'autre (figure 2A). À l'opposé un filtre angulaire de forte sélectivité (Δθᵢ petit) pourra être obtenu en assemblant des filtres spectraux présentant des relations de dispersion fortement contrastées, par exemple deux filtres de forte dispersion dont les pentes sont de signe opposé (figure 2B). On observe par ailleurs que la sélectivité angulaire de l'élément de filtrage angulaire Eᵢ de l'invention est également dépendante des bandes passantes spectrales des premier et deuxième filtres qui le composent. En effet, plus la bande passante spectrale des deux filtres est fine, plus la sélectivité angulaire sera forte (voir figure 2A et 2B : plus les bandes 21 et 22 sont fines, plus Δθᵢ est faible). En effet, le secteur angulaire dans lequel les bandes passantes des deux filtres spectraux 11ᵢ et 12ᵢ se recouvrent présente un angle zénithal au sommet (2Δθᵢ) plus faible.

La technologie actuelle des filtres spectraux passe bande nanostructurés permet de réaliser des filtres avec des courbes de dispersion contrôlées, permettant la réalisation d'éléments de filtrage angulaire d'angles d'incidence de fonctionnement et de largeurs de bande angulaire zénithale et azimutale déterminées en fonction de l'application.

Pour ce faire, il est connu d'employer des algorithmes dits « algorithmes génétiques ».L'algorithme génétique tire son nom de l'analogie qui est faite avec la sélection naturelle dans une espèce. Il consiste à explorer une population d'objets en fonction de leurs propriétés, et en rapport avec une propriété visée. Pour cela, on définit les variables à optimiser (par exemple les dimensions des structurations), une propriété avec une valeur-cible (par exemple la transmission à un angle donné) et un critère de convergence (par exemple l'écart à la valeur de transmission visée). Des opérations de sélections et de croisements permettent de créer de nouvelles générations d'objets dont les propriétés tendent, au fil des itérations, vers les valeurs-cibles. De tels algorithmes génétiques sont décrits par exemple dans R.L. Haupt et al. ("Practical genetic algorithms", Wiley-Interscience (2004)).

En regroupant un ensemble de ces éléments de filtrage, comme cela est illustré par exemple sur la figure 1, il est possible de réaliser un dispositif pour le filtrage angulaire sélectif à plusieurs angles d'incidence donnés. Par ailleurs, en agençant les premiers et deuxièmes filtres spectraux sous forme de matrices, il est possible d'utiliser les techniques connues de la micro-électronique pour une production massivement parallèle, à bas coût.

Dans l'exemple illustratif de la figure 1, les premiers et deuxièmes filtres spectraux 11ᵢ, 12ᵢ sont des filtres fonctionnant en transmission. Cependant, les technologies actuelles des filtres nanostructurés permettent de réaliser des filtres spectraux à courbe de dispersion contrôlée en transmission, en réflexion et en absorption.

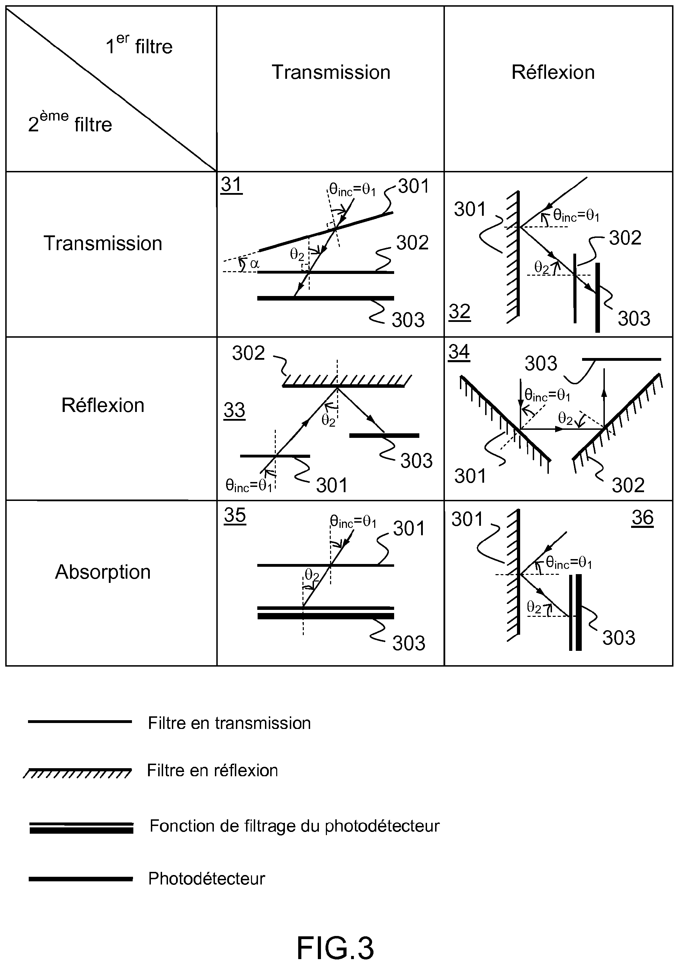

La figure 3 représente de façon schématique un tableau illustrant différents agencements possibles, référencés 31 à 36, pour un système optique de détection multidirectionnelle selon la présente description. Dans chacune des configurations, le filtre spectral recevant le flux lumineux incident (« filtre spectral d'entrée ») est référencé 301, le filtre spectral recevant le flux transmis ou réfléchi par le filtre spectral d'entrée est référencé 302 (« filtre spectral de sortie ») et l'élément de détection est référencé 303. L'angle d'incidence sur le filtre spectral d'entrée est noté θ₁ ; c'est aussi l'angle d'incidence θ_{inc} sur l'élément de filtrage angulaire composé des premier et deuxième filtre spectraux. L'angle d'incidence sur le filtre spectral de sortie est noté θ₂ ; il est égal à l'angle d'incidence θ_{inc} sur l'élément de filtrage angulaire lorsque les filtres spectraux d'entrée et de sortie sont dans des plans sensiblement parallèles. Lorsque les filtres spectraux d'entrée et de sortie ne sont pas dans des plans parallèles, l'angle d'incidence θ₂ sur le filtre spectral de sortie peut différer de l'angle d'incidence θ_{inc} sur l'élément de filtrage.

En pratique, la détermination de l'élément de filtrage angulaire composé du premier et du deuxième filtre spectral et donnant, dans une bande spectrale donnée, une fonction de filtrage angulaire autour d'un angle d'incidence de fonctionnement donné, pourra se faire de la manière suivante. Pour l'angle de fonctionnement souhaité, on pourra choisir un filtre spectral de sortie avec une courbe de dispersion angulaire connue qui donnera, en fonction de l'angle d'incidence θ_{inc} sur l'élément de filtrage, la longueur d'onde centrale de filtrage du filtre spectral de sortie par un simple changement de variable. Le filtre spectral d'entrée pourra alors être choisi avec une courbe de dispersion angulaire connue, qui filtrera à l'angle d'incidence θ_{inc} cette même longueur d'onde centrale de filtrage. La configuration représentée dans la case 31 du tableau montre ainsi deux filtres spectraux 301 et 302 fonctionnant en transmission et qui présentent entre eux un angle α non nul, tel que θ₂ = θ₁-α. Pour déterminer plus facilement la zone de fonctionnement souhaité de l'élément de filtrage angulaire formé des deux filtres spectraux, on pourra faire coïncider λ_{c1}(θ₁), courbe de dispersion angulaire du filtre spectral d'entrée 301, et λ_{c2}(θ₂) = λ_{c2}(θ₁-α), courbe de dispersion angulaire du filtre spectral de sortie 302 de façon à ce que ces courbes de dispersion se croisent dans la zone de fonctionnement recherchée. Afin de déterminer les courbes de dispersion angulaire adéquates, des algorithmes génétiques tels que décrits précédemment pourront par exemple être mis en oeuvre. On pourra ainsi par exemple se reporter à S. Tibuleac et al. pour l'optimisation d'un filtre GMR tout diélectrique en transmission (voir S. Tibuleac et al. « Narrow-linewidth bandpass filters with diffractive thin-film layers », Opt. Lett. 26.9, p. 584-586 (2001)).

Dans les configurations représentées sur la première colonne du tableau, le filtre spectral d'entrée 301 fonctionne en transmission. Il peut s'agir par exemple d'un filtre spectral à base de réseaux métalliques suspendus épais (l'épaisseur du réseau est grande devant la largeur des pentes), tel que décrit dans l'article de R. Haïdar et al. mentionné ci-dessus. Il peut s'agir aussi d'un filtre à résonance de mode guidé, diélectrique ou métal-diélectrique tel que décrit dans la section « Etat de l'art » de la présente demande. Dans les configurations représentées sur la seconde colonne du tableau, le filtre spectral d'entrée 301 fonctionne en réflexion. Il peut s'agir également d'un filtre à résonance de mode guidé diélectrique ou d'un filtre spectral nanostructuré formé à partir d'une grille diélectrique (voir par exemple l'article de P. Ghenuche et al. précédemment cité). Le filtre spectral de sortie 302 peut être un filtre en transmission (configurations 31 et 32) ou en réflexion (configurations 33, 34).

Les configurations représentés dans les cases 35 et 36 du tableau représentent les cas où le filtre spectral de sortie est intégré dans l'élément de détection 303 qui possède lui-même une fonction de filtre spectral passe bande. Dans ce cas, il s'agit d'un filtrage spectral en absorption (voir par exemple l'article de P. Bouchon et al. cité précédemment).

Pour chacun de ces filtres, la maîtrise des outils de simulation permet de déterminer les caractéristiques physiques des structures permettant d'obtenir la courbe de dispersion angulaire recherchée.

Les configurations en transmission telles que représentées par exemple dans les cases 31 et 35 du tableau sont avantageuses en ce qu'elles permettent de minimiser l'encombrement. Les configurations dans lesquelles un filtre spectral fonctionne en réflexion sont plus encombrantes que les précédentes mais elles peuvent permettre de donner accès à des angles d'incidence très élevés (en particulier dans le cas de l'association d'un filtre en réflexion et d'un filtre en transmission), comme cela sera décrit dans la suite.

Bien que les configurations présentées dans la figure 3 mettent en oeuvre des éléments de filtrage angulaire comprenant chacun deux filtres spectraux, il est possible de réaliser des éléments de filtrage angulaire avec trois filtres spectraux ou plus, dans le but par exemple d'augmenter encore la sélectivité angulaire. Les filtres spectraux sont alors agencés ensemble de telle sorte qu'un filtre spectral subséquent reçoive le flux transmis ou réfléchi par le filtre spectral précédent. Dans ce cas, les courbes de dispersion angulaires de chacun des filtres spectraux, déterminées en fonction de l'angle d'incidence sur l'élément de filtrage angulaire dont il fait partie, pourront être sécantes (non confondues) au voisinage de l'angle d'incidence recherché pour l'élément de filtrage angulaire.

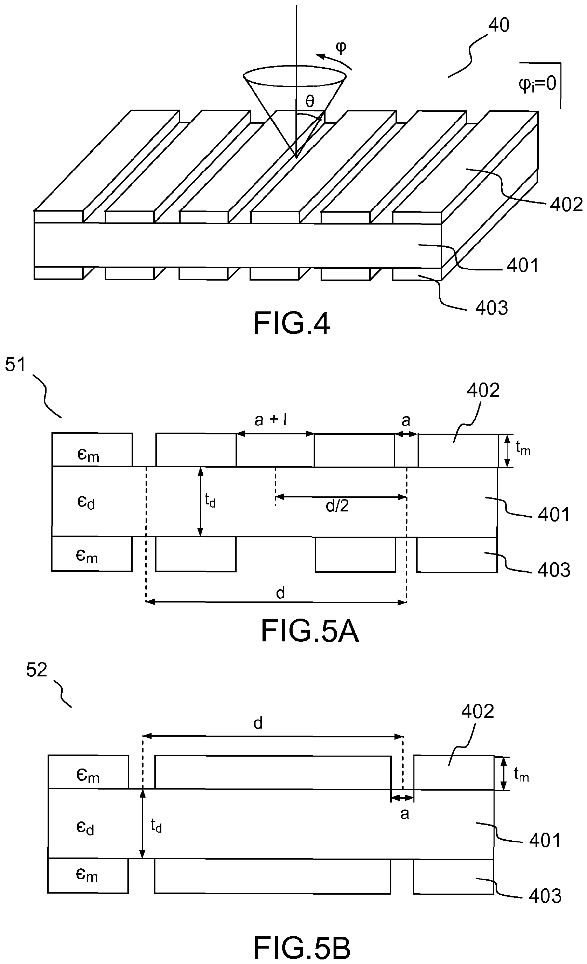

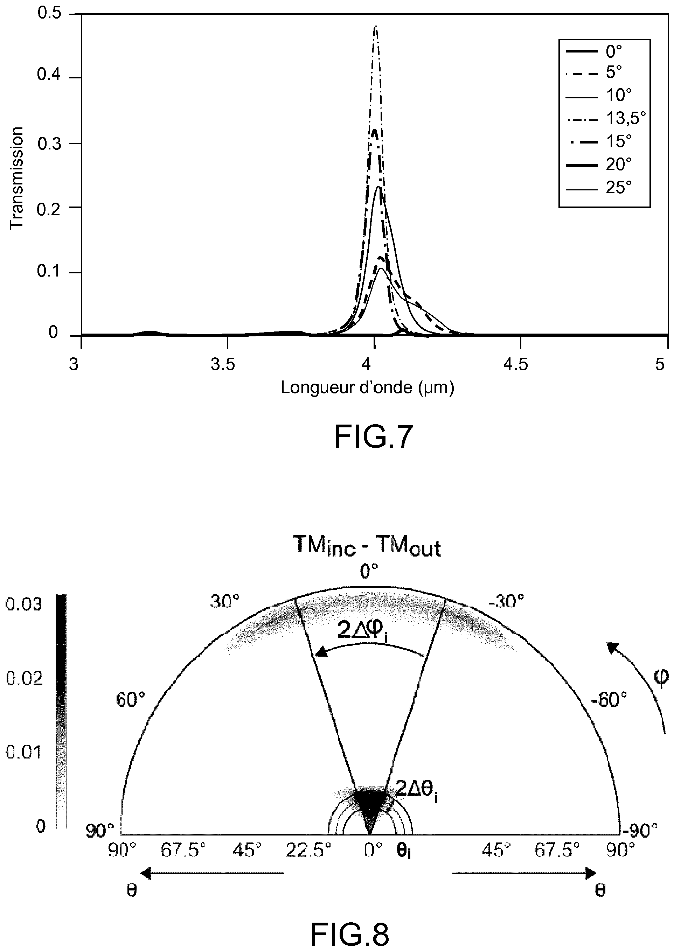

Les déposants ont mis en évidence la faisabilité d'un élément de filtrage angulaire selon la présente description, à la fois au moyen de simulations numériques et de tests expérimentaux. Les figures 7 et 8 montrent des résultats de simulation obtenus avec des filtres spectraux passe bandes nanostructurés tels que décrits au moyen des figures 4 à 6.

Le filtre spectral passe bande 40 représenté sur la figure 4 est un filtre dit à résonance de mode guidé, ou GMR (selon l'abréviation de l'expression anglo-saxonne « Guided Mode Resonance »). Le filtre 40 comprend un guide d'onde 401 en matériau diélectrique (permittivité diélectrique ε_{d}) comportant sur chacun de ses faces un réseau métallique unidimensionnel (permittivité diélectrique εₘ). La structure ainsi représentée est fortement réfléchissante sur la gamme de longueur d'onde considérée car le réseau métallique a des fentes très étroites. A la résonance en revanche, la transmission du composant devient importante. Les ordres ± 1 diffractés par le réseau se couplent avec les modes propres du guide d'onde diélectrique. Ils sont piégés dans le guide d'onde et ressortent en transmission dans l'ordre 0 soit de manière directe soit via un couplage des ordres ± 1 avec le réseau de diffraction. L'étude détaillée de ces réseaux est décrite par exemple dans l'article d'E. Sakat (voir référence ci-dessus). Pour les simulations présentées dans la présente description, la méthode B-Splines décrite par exemple dans l'article de P. Bouchon et al. ("Fast modal method for subwavelength gratings based on B-spline formulation", J. Opt. Soc. Am. A, 27 696-702 (2010)) est utilisée.

Plus précisément, les simulations ont été réalisées avec un élément de filtrage angulaire comprenant un filtre spectral d'entrée 51 tel que décrit sur la figure 5A et un filtre spectral de sortie 52 tel que décrit sur la figure 5B.

Le filtre spectral d'entrée 51 est composé d'un guide d'onde en diélectrique 401 comportant sur chacune de ses faces un réseau métallique unidimensionnel (1D) en or, l'ensemble étant entouré d'air. Les réseaux 402, 403 sont dits « bi-atome ». En effet ils comportent deux motifs par période d, une fente de largeur *a* et une fente de largeur *a*+*l*. Un filtre de ce type peut permettre l'obtention d'une relation de dispersion très plate pour des angles d'incidence compris entre -25 et +25 degrés (dans le plan d'angle azimutal nul ϕ=0), et une polarisation TM.

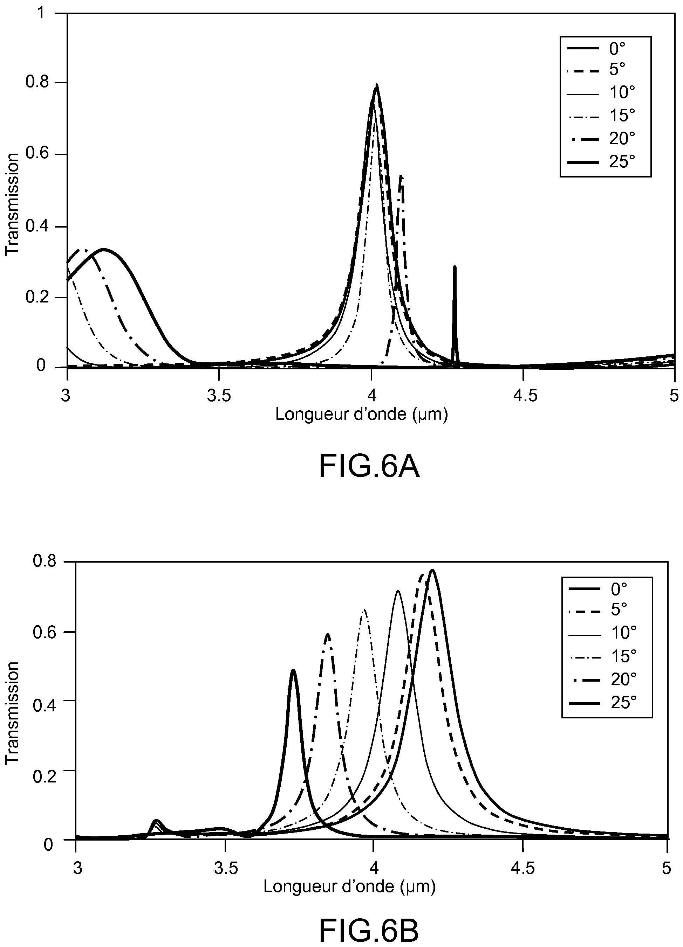

La figure 6A montre ainsi une série de spectres en transmission calculés pour un angle azimutal nul (*ϕ*=0) pour des angles compris entre 0 et 25° d'un premier filtre spectral tel que représenté sur la figure 5A. Pour cette simulation, le guide d'onde 401 est choisi en nitrure de silicium (SiNₓ), de permittivité diélectrique ε_{d}=4, comportant sur chacune de ses faces un réseau métallique 1D en or. Les paramètres du réseau sont : d=3 µm, tₘ=0.1 µm, a=0.2 µm, l=0.5 µm, t_{d}=0.7 µm, n(SiNₓ) =2. Dans cette gamme d'angle la transmission TM maximale à la résonance est proche de 80%. On observe qu'entre θ₁ = 0° (incidence normale) et θ₁ = 25°, la longueur d'onde centrale de filtrage (autour de 4 µm) varie très peu.

Le deuxième filtre spectral 52 est composé comme le premier filtre spectral 51 d'un guide d'onde en diélectrique 401 comportant sur chacune de ses faces un réseau métallique unidimensionnel (1D) en or. Contrairement au cas précédent, les réseaux 402, 403 ne sont constitués que d'un seul motif par période d, une fente de largeur a. Un filtre de ce type peut permettre l'obtention d'une dispersion angulaire très forte dans le plan d'angle azimutal nul (ϕ=0).

La figure 6B montre ainsi une série de spectres en transmission calculés pour un angle azimutal nul (*ϕ*=0) pour des angles compris entre 0 et 25° d'un deuxième filtre spectral tel que représenté sur la figure 5B. Pour cette simulation, le guide d'onde 401 est choisi en nitrure de silicium (SiNₓ), de permittivité diélectrique ε_{d}=4, comportant sur chacune de ses faces un réseau métallique 1D en or. Les paramètres du réseau sont : d=2,5 µm, tₘ=0.1 µm, a=0.3 µm, t_{d}=0.8 µm, n(SiNₓ) =2. On observe que la transmission maximale se décale de 4.23 µm à incidence normale à 3.7 µm pour une incidence de 25°. La transmission TM maximale (à la résonance) varie également de 78% à 50%.

Ainsi, les courbes de dispersion des premier et deuxième filtres spectraux telles que représentées sur les figures 5A et 5B, calculées dans le plan d'angle azimutal nul (*ϕ*=0) et en polarisation TM (champ magnétique H parallèle aux fentes du réseau) avec les paramètres mentionnés ci-dessus sont très contrastées. Le premier filtre spectral présente une dispersion quasi-nulle alors que le deuxième montre une forte dispersion positive (la résonance se décale vers les faibles longueurs d'onde quand l'angle d'incidence augmente). On s'attend donc en combinant le premier et le deuxième filtre spectral pour former l'élément de filtrage angulaire à trouver une sélectivité spectrale forte. On observe que les longueurs d'onde de résonance des deux filtres coïncident (λ_{c1} = λ_{c2}) autour d'un angle proche de 13.5°. À λ=4.005µm, θ= 13.5°, les transmissions des filtres sont *T₁*=70.73% et *T₂*=68.04%. On s'attend donc à un filtre angulaire présentant une résonance pour *λ*=4.005µm, θ_{inc} =13.5° avec une transmission totale *T*=*T₁*×*T₂*=48.1%.

La figure 7 représente des courbes de transmission calculées avec les deux filtres 51 et 52 précédemment décrits, séparés par une lame d'air de 300µm, pour des angles d'incidence allant de 0 à 25° et dans le plan d'angle azimutal nul *ϕ*=0. En accord avec ce qui précède, on constate une transmission résonante à *λ*=4.005µm, un maximum de transmission pour λ=4.005µm et θ_{inc} = 13.5° (T = 48.1%), une faible largeur spectrale du pic (largeur à mi-hauteur FWHM de 60 nm et facteur de qualité Q défini par le rapport de la longueur d'onde de résonance par la largeur à mi-hauteur de 67), une absence de transmission en dehors l'intervalle [3.8, 4.3] µm; comme cela apparaît sur la figure 7, la transmission est inférieure à 0.5% en dehors de cet intervalle. La sélectivité angulaire obtenue est de Δθ≈±8°.

Ces simulations montrent que la transmission du filtre angulaire est correctement décrite par la loi simple : *T*(*λ*, *θ*) = *T₁*(*λ*, *θ*) * *T₂*(*λ*, *θ*). Il est ainsi possible de dimensionner les filtres spectraux indépendamment les uns des autres et de prédire les performances de l'élément de filtrage angulaire obtenu par leur combinaison.

Les résultats des simulations présentés ci-dessus se situent dans un plan de l'espace d'angle azimutal nul, c'est-à-dire *ϕᵢ*=0 (tel qu'indiqué sur la figure 4). Dans la pratique, on peut rechercher à viser une détection dans un cône d'axe (*θᵢ*, *ϕᵢ*) et d'angles au sommet (2*Δθᵢ*, 2*Δϕᵢ*).

La figure 8 montre des résultats de simulations effectuées avec un élément de filtrage angulaire tel que défini précédemment, pour tous les plans de l'espace, pour une onde incidente polarisée TM (champ magnétique H orthogonal au plan d'incidence, i.e. parallèle aux fentes dans le cas ϕ=0) et une détection selon une polarisation TM également. Plus précisément, la figure 8 présente un diagramme polaire représentant le comportement de l'élément de filtrage angulaire en fonction de l'angle d'incidence *θ* (axe radial) et de l'angle azimutal *ϕ* (angle du diagramme polaire). L'échelle de couleur correspond à l'intégrale de la transmission TM de l'élément de filtrage angulaire sur la gamme de longueur d'onde [3.81 - 4.19] µm. Cette figure met en évidence une transmission maximale dans un cône de lumière correspondant à *θᵢ*=13.5±8° et *ϕᵢ*=±20°. Les tâches lumineuses parasites (θ proche de 90°) visibles sur la figure 8 peuvent être écrantées soit par le boîtier du détecteur soit par un écran limiteur de champ.

Des simulations faites en polarisation incidente TE (champ électrique E parallèle aux fentes du réseau) montrent qu'avec un élément de filtrage angulaire utilisant ce type de filtres spectraux, la lumière incidente polarisée TM est, selon l'axe de filtrage angulaire, transmise avec un coefficient de transmission élevé. Des simulations faites en polarisation incidente TM et TE et en détection TE montrent que très peu de lumière traverse l'élément de filtrage, quels que soient les angles d'incidence zénithal θ et azimutal ϕ. L'élément de filtrage angulaire est donc un élément polarisant, sélectif dans un cône de lumière.

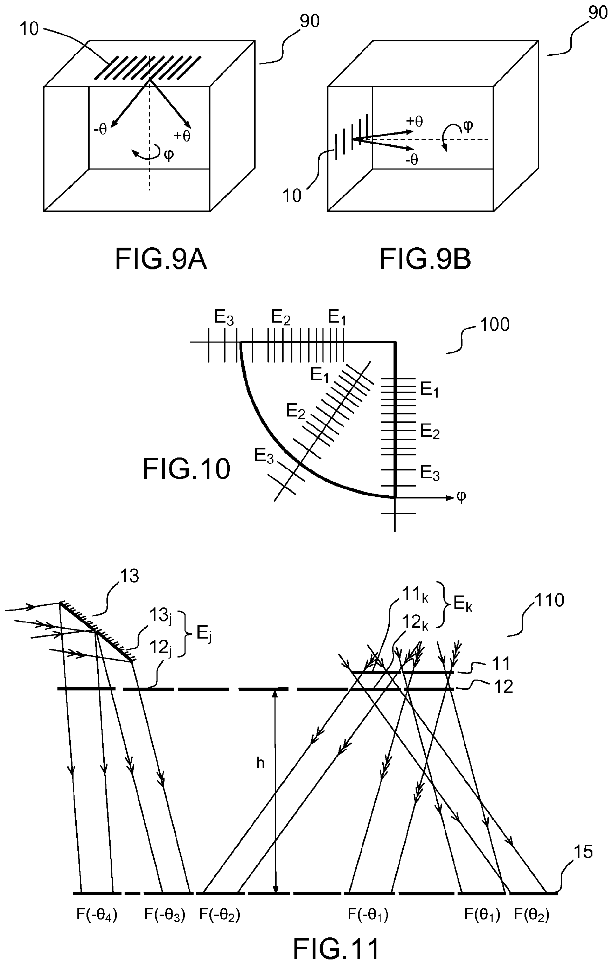

Les figures 9A et 9B montrent des exemples de mise en oeuvre dans un volume 90, par exemple une pièce d'habitation, de systèmes de détection optique multidirectionnelle 10 selon la présente description. Dans l'exemple de la figure 9A, le système de détection 10 est situé au plafond tandis que dans l'exemple de la figure 9B, le système de détection 10 est situé sur un mur de la pièce. Le système de détection multidirectionnelle comprend dans cet exemple des éléments de filtrage angulaire formés de filtres spectraux présentant des réseaux à une dimension. Les traits schématisent ainsi les fentes du réseau. Le plan ϕ=0 est orthogonale à la direction des fentes (c'est dans ce plan que la sélection angulaire du filtre est la plus efficace). Seule la lumière polarisée TM (champ magnétique H parallèle aux fentes du réseau) est transmise. Le filtre angulaire laisse passer la lumière dans deux cônes centrés sur les directions (ϕ=0, θ) et (ϕ=0, -θ). Les axes de ces deux cônes sont représentés par les flèches sur les figures 9A et 9B.

Dans l'exemple de la figure 9A, lorsque le système de détection 10 est placé au plafond de la pièce, l'angle d'incidence θ (c'est-à-dire l'angle que l'on peut accorder) est dans un plan vertical : les fentes sont en effet dans un plan horizontal.

La figure 10 montre un exemple de dispositif de filtrage sélectif à plusieurs angles d'incidence, en forme de rosace, adapté à une mise en oeuvre d'un système de détection tel que représenté sur la figure 9A, et permettant de balayer également l'espace en *ϕ*. Dans cet exemple, le dispositif de filtrage angulaire sélectif comprend un ensemble d'éléments de filtrage angulaire Eᵢ agencés sous forme de matrices à une dimension (barrettes), elles-mêmes réparties sous forme d'une rosace. Chacun des éléments de filtrage angulaire E₁, E₂ et E₃ sélectionne un cône (*θᵢ*, *ϕᵢ*=±20°) différent. Ce sont ainsi les différentes branches de la rosace qui permettent de viser les différents plans azimutaux et donc les différents coins de la pièce. Le recouvrement des signaux détectés sur la matrice de détecteurs (par exemple signaux provenant de deux barrettes différentes pas suffisamment espacées en ϕ) est possible mais doit être limité au maximum pour faciliter l'exploitation des données.

Dans l'exemple de la figure 9B, lorsque le système de détection 10 est situé sur le mur, les fentes sont avantageusement orientées verticalement. Dans ce cas, le plan ϕ=0 est horizontal (parallèle au plafond) et on balaye tous les coins de la pièce avec les divers angles θ. La mise en oeuvre d'une rosace telle que représentée sur la figure 10 est donc inutile dans ce cas. Dans cette configuration, il suffit de faire une mosaïque de filtres rectiligne (de fentes verticales), dont chacun des filtres sélectionne un angle θ différent, ce qui équivaut à une unique branche de la rosace précédente. La mise en oeuvre est plus simple et la sélectivité angulaire n'est plus limitée par Δϕ mais par Δθ (largeur à mi-hauteur du cône angulaire sélectionné selon θ). On peut donc espérer une plus grande sélectivité angulaire dans ce cas (on rappelle que dans l'exemple illustratif Δθ=±8°, alors que Δϕ=±20°). Par ailleurs, si on place la mosaïque de filtres dans un coin de la pièce, il suffit qu'elle sélectionne des angles θ compris entre -45° et 45° pour scanner toute la pièce. De même un détecteur placé dans l'angle des murs et du plafond permet une détection dans toute la pièce pour des angles θ compris entre -60 et 60 degrés.

La figure 11 représente un autre exemple de système de détection optique multidirectionnelle 110 selon la présente description.

Dans cet exemple, le système de détection multidirectionnelle comprend une première matrice 11 de filtres spectraux d'entrée fonctionnant en transmission, une deuxième matrice 13 de filtres spectraux d'entrée fonctionnant en réflexion et une matrice 12 de filtres spectraux de sortie fonctionnant en transmission. A chaque filtre spectral de sortie (par exemple 12ⱼ ou 12ₖ) est associé un filtre spectral d'entrée soit de la première matrice de filtres spectraux d'entrée (par exemple 11ₖ) soit de la deuxième matrice de filtres spectraux d'entrée (par exemple 13ⱼ) pour former respectivement des éléments de filtrage angulaire Eⱼ, Eₖ. Dans cet exemple, la première matrice de filtres spectraux d'entrée 11, constituée de filtres passe-bande en transmission, permet de collecter les angles d'incidence entre -40° et 40° environ ; la deuxième matrice de filtres spectraux d'entrée 13, constituée de filtres passe-bandes en réflexion, permet de collecter les angles compris entre des valeurs inférieures à -90° et -40°. On pourrait ajouter une troisième matrice de filtres spectraux d'entrée fonctionnant en réflexion, symétrique de la deuxième matrice de filtres spectraux d'entrée 13 par rapport à la première matrice de filtres spectraux d'entrée en transmission 11 pour récolter les angles compris entre +40° et des valeurs supérieures à +90°. Il est ainsi possible grâce au système de détection multidirectionnelle selon la présente description d'aller au-delà de 90° et de viser derrière le détecteur. Il est par ailleurs possible de différencier sur la matrice de détecteur 15 à la fois les angles d'incidence différentes θ1 et θ2 mais aussi l'angle θ1 de son opposé -θ1.

Avantageusement, la hauteur h entre le plan de la matrice 15 d'éléments de détection optique et la matrice 12 de filtres spectraux de sortie est choisie suffisamment grande pour éviter des recouvrements au niveau des éléments de détection. Typiquement, une hauteur h supérieure à 6 fois la distance entre les deux matrices de filtres spectraux peut être choisie. Chaque élément de détection ou ensemble d'éléments de détection, ne reçoit ainsi que le flux lumineux F(θᵢ) incident sur l'élément de filtrage dont l'angle de fonctionnement est θᵢ.

Les matrices de filtres spectraux pourront être réalisées selon des technologies connues, en fonction de la nature des filtres spectraux utilisés.

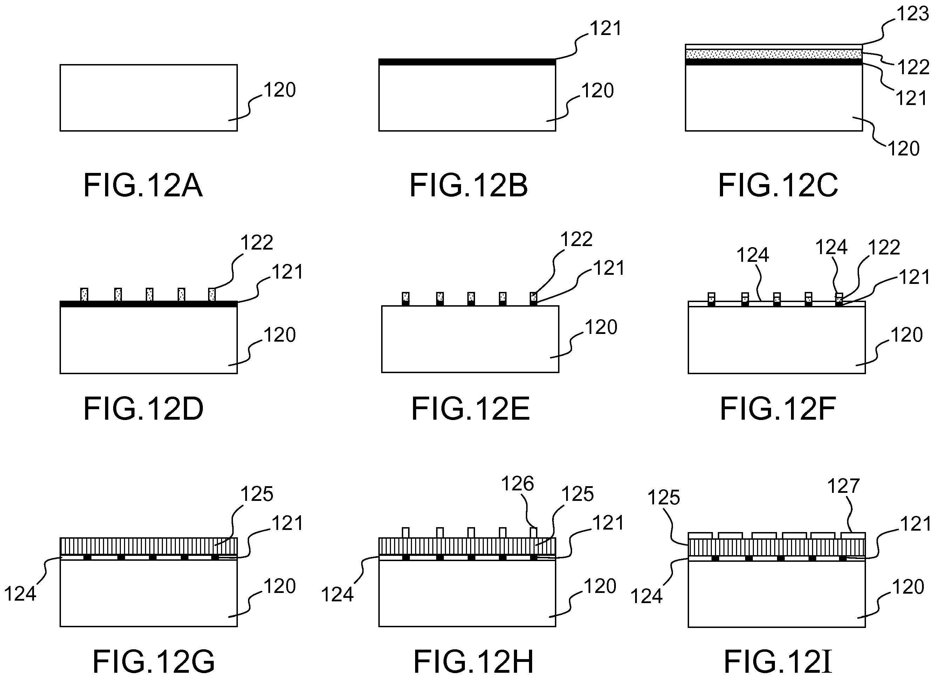

Les figures 12A à 12I illustrent plus particulièrement les étapes de réalisation d'une matrice de filtres spectraux comprenant des structures à résonance de mode guidé, du type de ceux décrits sur les figures 4, 5A, 5B.

Le procédé de fabrication peut comprendre selon un exemple les étapes suivantes :
- Préparation d'un substrat 120 poli double face, transparent dans la bande spectrale recherchée, par exemple un substrat de saphir poli (figure 12A) et formant le support de la matrice;
- Dépôt d'une couche 121 de carbure de silicium (SiC) dans un bâti de pulvérisation (figure 12B) ;
- Mise en oeuvre d'une première étape de lithographie électronique permettant de définir un masque de gravure en résine, comprenant le dépôt d'une couche de résine 122, le dépôt d'un film fin d'or 123 (figure 12C), la lithographie électronique pour former un premier motif correspondant aux réseaux 403 (figure 4) des différents éléments de filtrage angulaire de la matrice, le retrait de la couche d'or et le développement (figure 12D);

- Gravure de la couche de carbure de silicium (121) par procédé RIE (selon l'abréviation de l'expression anglo-saxonne « Reactive Ion Etching ») (figure 12E) ;
- Dépot d'un réseau d'or (124) dans les fentes créées par la gravure du SiC (figure 12F) ;
- Retrait de la résine et dépôt d'une couche épaisse (125) de SiC (figure 12G) ;
- Deuxième étape de lithographie avec éventuellement un alignement du premier et du deuxième motif (figure 12H) ;
- Lift-off d'un réseau d'or (figure 12I).

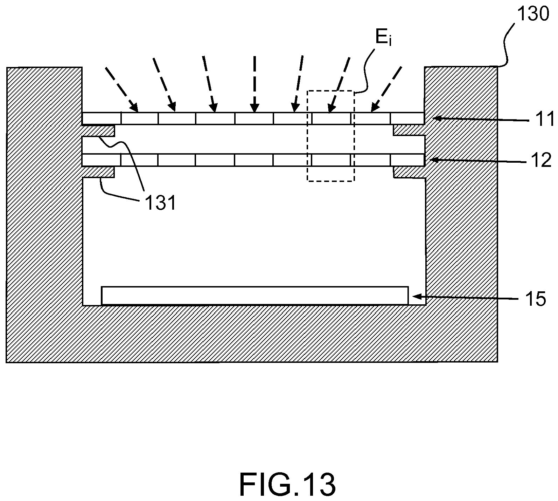

Les matrices de filtres spectraux une fois réalisées peuvent être agencées dans un boîtier adapté à recevoir une matrice d'éléments de détection optique, comme cela est illustré sur la figure 13.

Dans cet exemple, un boîtier 130 est adapté à recevoir deux matrices 11, 12, respectivement de filtres spectraux d'entrée et de sortie, et une matrice 15 d'éléments de détection optique. Les matrices 11 et 12 sont par exemple tenues par des cales 131 et sont distantes typiquement de quelques centaines de micromètres. La matrice 15 d'éléments de détection est positionnée à une distance supérieure des matrices de filtres spectraux, typiquement quelques millimètres. Le boîtier peut être un cryostat, par exemple lorsque la matrice 15 d'éléments de détection optique nécessite de travailler en milieu refroidi. Il peut être une chambre à vide, par exemple lorsque la matrice 15 d'éléments de détection est formée de bolomètres. Il sera apparent pour l'homme du métier que le boîtier pourra être adapté en fonction du nombre et de la forme des matrices de filtres spectraux d'entrée et de sortie, ainsi que de la matrice d'éléments de détection optique.

Bien que décrite à travers un certain nombre d'exemples de réalisation détaillés, la structure et la méthode de réalisation de l'élément de filtrage optique angulaire selon l'invention comprend différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Elément de filtrage optique angulaire (Eᵢ) optimisé pour le filtrage angulaire autour d'un angle d'incidence de fonctionnement (θᵢ, ϕᵢ) donné, dans une bande spectrale donnée, comprenant :
- un premier filtre spectral nanostructuré (11ᵢ, 301), passe-bande, comprenant, dans ladite bande spectrale, une première longueur d'onde centrale de filtrage qui présente une première courbe de dispersion angulaire, la courbe de dispersion angulaire représentant la variation de la première longueur d'onde centrale de filtrage déterminée en fonction de l'angle d'incidence sur l'élément de filtrage optique (Eᵢ);
- un deuxième filtre spectral nanostructuré (12ᵢ, 302), passe-bande, comprenant, dans ladite bande spectrale, une deuxième longueur d'onde centrale de filtrage qui présente une deuxième courbe de dispersion angulaire représentant la variation de la deuxième longueur d'onde centrale de filtrage déterminée en fonction de l'angle d'incidence sur l'élément de filtrage optique (Eᵢ), la deuxième courbe de dispersion angulaire étant sécante avec la première courbe de dispersion angulaire autour de l'angle d'incidence de fonctionnement (θᵢ, ϕᵢ).

2. Elément de filtrage optique angulaire selon la revendication 1, dans lequel l'un au moins des premier et deuxième filtres spectraux fonctionnent en transmission.

3. Elément de filtrage optique angulaire selon l'une quelconque des revendications précédentes, dans lequel l'un au moins des premier et deuxième filtres spectraux fonctionnent en réflexion.

4. Elément de filtrage optique angulaire selon l'une quelconque des revendications précédentes, dans lequel un des premier et deuxième filtres spectraux fonctionne en absorption.

5. Elément de filtrage optique angulaire selon l'une quelconque des revendications précédentes, dans lequel les premier et deuxième filtres spectraux sont agencés dans des plans non parallèles.

6. Elément de filtrage optique angulaire selon l'une quelconque des revendications précédentes, dans lequel l'un au moins des premier et deuxième filtres spectraux nanostructurés est un filtre à résonance de mode guidé, un filtre à réseaux métalliques ou diélectrique suspendus, ou encore un filtre comprenant une résonance de type MIM (métal, isolant, métal).

7. Elément de filtrage optique angulaire selon l'une quelconque des revendications précédentes, dans lequel l'un au moins des premier et deuxième filtres spectraux nanostructurés est un filtre interférentiel.

8. Dispositif pour le filtrage angulaire sélectif à plusieurs angles d'incidence donnés, comprenant un ensemble d'éléments de filtrage optique angulaire selon l'une quelconque des revendications précédentes, optimisés chacun pour le filtrage angulaire autour d'un angle d'incidence de fonctionnement donné (θᵢ, ϕᵢ).

9. Dispositif selon la revendication 8, dans lequel les premiers filtres spectraux nanostructurés sont agencés selon au moins une première matrice (11) à une ou deux dimensions, comprenant un premier support plan, et les deuxièmes filtres optiques nanostructurés sont agencés selon au moins une deuxième matrice (12) à une ou deux dimensions, comprenant un deuxième support plan.

10. Dispositif selon la revendication 9, dans lequel les premier et deuxième supports sont agencés dans des plans non parallèles.

11. Système de détection optique multidirectionnelle comprenant un dispositif pour le filtrage angulaire sélectif selon l'une quelconque des revendications 8 à 10 et un ensemble d'éléments de détection optique (15ⱼ), chaque élément de détection optique étant associé à un élément de filtrage optique angulaire pour recevoir le flux lumineux transmis par ledit élément de filtrage optique angulaire à l'angle d'incidence de fonctionnement dudit élément de filtrage optique angulaire.

12. Système de détection optique multidirectionnelle selon la revendication 11, dans lequel l'un des premier ou deuxième filtres spectraux d'un élément de filtrage optique angulaire est un filtre en absorption formé par l'élément de détection optique associé audit élément de filtrage optique angulaire.

13. Système de détection optique multidirectionnelle selon l'une quelconque des revendications 11 ou 12, dans lequel les éléments de détection optique sont des bolomètres.

14. Système de détection optique multidirectionnelle selon l'une quelconque des revendications 11 à 13, dans lequel les éléments de détection optique sont agencés selon une matrice (15) à une ou deux dimensions, comprenant un support plan.

15. Système de détection optique multidirectionnelle selon l'une quelconque des revendications 11 à 14 comprenant en outre un boitier (130) dans lequel sont agencés le dispositif pour le filtrage angulaire sélectif et l'ensemble des éléments de détection optique.

16. Méthode de fabrication d'un système de détection optique multidirectionnelle selon l'une quelconque des revendications 11 à 15 comprenant :
- la fabrication d'une première matrice de premiers éléments spectraux sur un premier support plan ;
- la fabrication d'une deuxième matrice de deuxièmes éléments spectraux sur un deuxième support plan ;
- la fabrication d'une troisième matrice d'éléments de détection optique sur un troisième support plan ;
- l'arrangement desdites matrices dans un boitier.

## Patentansprüche

1. Gewinkeltes optisches Filterelement (Eᵢ), das für die winkelförmige Filterung um einen gegebenen Betriebseinfallswinkel (θᵢ, ϕᵢ) herum in einem gegebenen Spektralband optimiert ist und umfasst:
- ein erstes nanostrukturiertes Spektralbandpassfilter (11ᵢ, 301) mit einer ersten zentralen Filterungswellenlänge in diesem Spektralband, das eine erste Winkelstreuungskurve aufweist, wobei die Winkelstreuungskurve die Schwankung der ersten zentralen Filterungswellenlänge in Abhängigkeit vom Einfallswinkel am optischen Filterelement (Eᵢ) wiedergibt;
- ein zweites nanostrukturiertes Spektralbandpassfilter (12ᵢ, 302) mit einer zweiten zentralen Filterungswellenlänge in diesem Spektralband, das eine zweite Winkelstreuungskurve aufweist, welche die Schwankung der zweiten zentralen Filterungswellenlänge in Abhängigkeit vom Einfallswinkel am optischen Filterelement (Eᵢ) wiedergibt, wobei die zweite Winkelstreuungskurve die erste Winkelstreuungskurve um den Betriebseinfallswinkel (θᵢ, ϕᵢ) herum schneidet.

2. Gewinkeltes optisches Filterelement nach Anspruch 1, bei dem wenigstens eines der ersten und zweiten Spektralfilter mittels Übertragung arbeitet.

3. Gewinkeltes optisches Filterelement nach einem der vorhergehenden Ansprüche, bei dem wenigstens eines der ersten und zweiten Spektralfilter mittels Reflexion arbeitet.

4. Gewinkeltes optisches Filterelement nach einem der vorhergehenden Ansprüche, bei dem eines der ersten und zweiten Spektralfilter mittels Absorption arbeitet.

5. Gewinkeltes optisches Filterelement nach einem der vorhergehenden Ansprüche, bei dem das erste und zweite Spektralfilter in nicht parallelen Ebenen angeordnet sind.

6. Gewinkeltes optisches Filterelement nach einem der vorhergehenden Ansprüche, bei dem wenigstens eines der ersten und zweiten nanostrukturierten Spektralfilter ein Filter mit Resonanz im geführten Modus, ein Filter mit hängenden metallischen oder dielektrischen Gittern oder ein Filter mit einer Resonanz des Typs MIM (Metall, Isolator, Metall) ist.

7. Gewinkeltes optisches Filterelement nach einem der vorhergehenden Ansprüche, bei dem wenigstens eines der ersten und zweiten nanostrukturierten Spektralfilter ein Interferenzfilter ist.

8. Vorrichtung zur selektiven winkelförmigen Filterung mit mehreren gegebenen Einfallswinkeln, die eine Gesamtheit von gewinkelten optischen Filterelementen nach einem der vorhergehenden Ansprüche umfasst, die jeweils für die winkelförmige Filterung um einen gegebenen Betriebseinfallswinkel (θᵢ, ϕᵢ) herum optimiert sind.

9. Vorrichtung nach Anspruch 8, bei der die ersten nanostrukturierten Spektralfilter gemäß wenigstens einer ersten ein- oder zweidimensionalen Matrix (11) mit einem ersten planen Träger und die zweiten nanostrukturierten optischen Filter gemäß wenigstens einer zweiten ein- oder zweidimensionalen Matrix (12) mit einem zweiten planen Träger angeordnet sind.

10. Vorrichtung nach Anspruch 9, bei der die ersten und zweiten Träger in nicht parallelen Ebenen angeordnet sind.

11. Multidirektionales optisches Erfassungssystem mit einer Vorrichtung zur selektiven winkelförmigen Filterung nach einem der Ansprüche 8 bis 10 und einer Gesamtheit von optischen Erfassungselementen (15ⱼ), wobei jedes optische Erfassungselement einem gewinkelten optischen Filterelement zugeordnet ist, um den Lichtstrom zu empfangen, der von diesem gewinkelten optischen Filterelement im Betriebseinfallswinkel des gewinkelten optischen Filterelements übertragen wird.

12. Multidirektionales optisches Erfassungssystem nach Anspruch 11, bei dem eines der ersten oder zweiten Spektralfilter eines gewinkelten optischen Filterelements ein Absorptionsfilter ist, das von dem optischen Erfassungselement, das diesem gewinkelten optischen Filterelement zugeordnet ist, gebildet wird.

13. Multidirektionales optisches Erfassungssystem nach einem der Ansprüche 11 oder 12, bei dem die optischen Erfassungselemente Bolometer sind.

14. Multidirektionales optisches Erfassungssystem nach einem der Ansprüche 11 bis 13, bei dem die optischen Erfassungselemente gemäß einer ein- oder zweidimensionalen Matrix (15) angeordnet sind, die einen planen Träger umfasst.

15. Multidirektionales optisches Erfassungssystem nach einem der Ansprüche 11 bis 14, das außerdem ein Gehäuse (130) umfasst, in dem die Vorrichtung für die selektive winkelförmige Filterung und die Gesamtheit der optischen Erfassungselemente angeordnet sind.

16. Verfahren zur Herstellung eines multidirektionalen optischen Erfassungssystems nach einem der Ansprüche 11 bis 15, das umfasst:
- Herstellung einer ersten Matrix von ersten Spektralelementen auf einem ersten planen Träger;
- Herstellung einer zweiten Matrix von zweiten Spektralelementen auf einem zweiten planen Träger;
- Herstellung einer dritten Matrix von optischen Erfassungselementen auf einem dritten planen Träger;
- Anordnung dieser Matrizen in einem Gehäuse.

## Claims

1. An angular optical filtering element (Eᵢ) optimized for the angular filtering about a given angle of incidence of operation (θᵢ, ϕᵢ), within a given spectral band, comprising:
- a first nanostructured band-pass spectral filter (11ᵢ, 301), comprising, within said spectral band, a first filtering central wavelength which exhibits a first angular dispersion curve, the angular dispersion curve representing the variation of the first filtering central wavelength determined as a function of the angle of incidence on the optical filtering element (Eᵢ);
- a second nanostructured band-pass spectral filter (12ᵢ, 302), comprising, within said spectral band, a second filtering central wavelength which exhibits a second angular dispersion curve representing the variation of the second filtering central wavelength determined as a function of the angle of incidence on the optical filtering element (Eᵢ), the second angular dispersion curve being secant with the first angular dispersion curve around the angle of incidence of operation (θᵢ, ϕᵢ).

2. The angular optical filtering element as claimed in claim 1, in which at least one of the first and second spectral filters operate in transmission mode.

3. The angular optical filtering element as claimed in any one of the preceding claims, in which at least one of the first and second spectral filters operate in reflection mode.

4. The angular optical filtering element as claimed in any one of the preceding claims, in which one of the first and second spectral filters operates in absorption mode.

5. The angular optical filtering element as claimed in any one of the preceding claims, in which the first and second spectral filters are arranged in non-parallel planes.

6. The angular optical filtering element as claimed in any one of the preceding claims, in which at least one of the first and second nanostructured spectral filters is a guided mode resonance filter, a filter with free-standing metal or dielectric gratings, or else a filter comprising a resonance of the MIM (metal-insulator-metal) type.

7. The angular optical filtering element as claimed in any one of the preceding claims, in which at least one of the first and second nanostructured spectral filters is an interference filter.

8. A device for selective angular filtering at several given angles of incidence, comprising an array of angular optical filtering elements as claimed in any one of the preceding claims, each optimized for angular filtering about a given angle of incidence of operation (θᵢ, ϕᵢ).

9. The device as claimed in claim 8, in which the first nanostructured spectral filters are arranged according to at least a first one- or two-dimensional matrix (11), comprising a first plane carrier, and the second nanostructured optical filters are arranged according to at least a second one- or two-dimensional matrix (12), comprising a second plane carrier.

10. The device as claimed in claim 9, in which the first and second carriers are arranged in non-parallel planes.

11. A multidirectional optical detection system comprising a device for selective angular filtering as claimed in any one of claims 8 to 10 and an array of optical detection elements (15ⱼ), each optical detection element being associated with an angular optical filtering element for receiving the light flux transmitted by said angular optical filtering element at the angle of incidence of operation of said angular optical filtering element.

12. The multidirectional optical detection system as claimed in claim 11, in which one of the first or second spectral filters of an angular optical filtering element is an absorption filter formed by the optical detection element associated with said angular optical filtering element.

13. The multidirectional optical detection system as claimed in either one of claims 11 and 12, in which the optical detection elements are bolometers.

14. The multidirectional optical detection system as claimed in any one of claims 11 to 13, in which the optical detection elements are arranged according to a one- or two-dimensional matrix (15), comprising a plane carrier.

15. The multidirectional optical detection system as claimed in any one of claims 11 to 14 furthermore comprising a housing (130) in which the device for selective angular filtering and the array of the optical detection elements are arranged.

16. A method for fabrication of a multidirectional optical detection system as claimed in any one of claims 11 to 15 comprising:
- the fabrication of a first matrix of first spectral elements on a first plane carrier;
- the fabrication of a second matrix of second spectral elements on a second plane carrier;
- the fabrication of a third matrix of optical detection elements on a third plane carrier;
- the arrangement of said matrices in a housing.
